(19) **Europäisches Patentamt**

**European Patent Office**

**Office européen des brevets**

(11) Veröffentlichungsnummer: **0 355 700**
**A2**

(12) **EUROPÄISCHE PATENTANMELDUNG**

(21) Anmeldenummer: **89115122.7**

(22) Anmeldetag: **16.08.89**

(51) Int. Cl.⁴: **F16B 47/00**

(30) Priorität: **17.08.88 DE 8816285 U**
**14.03.89 DE 8909309 U**
**09.05.89 DE 8909308 U**
**16.05.89 DE 8909307 U**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Gruber, Bruno**
**Ordenslandstrasse 39**
**D-8037 Olching(DE)**

(72) Erfinder: **Gruber, Bruno**
**Ordenslandstrasse 39**
**D-8037 Olching(DE)**

(74) Vertreter: **Kern, Ralf M., Dipl.-Ing.**
**Kern, Lang & Partner Patent- und**
**Rechtsanwaltsbüro Postfach 14 03 29**
**D-8000 München 5(DE)**

(54) **Halte- und Haftvorrichtung.**

㊷ Die Erfindung liegt in einer Halte- und Haftvorrichtung mit einem Haltekörper und ist dadurch gekennzeichnet, daß eine flexible bzw. elastisch-bewegliche Platte bzw. Folie, z. B. aus Gummi, Kunststoff oder dgl. mit mindestens einem Befestigungspunkt bzw. einer Befestigungsfläche an ihrer mit Abstand zu ihrem Rand angeordneten Innenfläche mit der Unterseite des biegesteifen bzw. vergleichsweise starren Haltekörpers z. B. durch Kleben oder Anvulkanisieren verbunden ist, und daß das Material des sich zwischen Befestigungsfläche und Rand befindlichen Randüberstands der z. B. 0,5 bis 3,0 mm oder auch bis 5 bzw. 10 mm dicken Platte bzw. Folie bei Einwirkung einer Abzugs- oder Kippkraft des auf auf einer Unterlage aufliegenden Haltekörpers an die Unterlage anschmiegbar und gegebenenfalls an Bodenunebenheiten anpaßbar ist.

EP 0 355 700 A2

## Halte- und Haftvorrichtung

Haltekörper bekannter Halte- und Haftvorrichtungen bestehen entweder in einem entsprechend schweren, zur Standfestigkeit ohnehin oft nicht ausreichenden Gewicht oder sind a priori zu leicht konstruiert, um z.B. als Fuß die von ihnen gehaltenen Gerätschaften wirklich sicher stand- und rutschfest zu halten. Auch die Verwendung von Saugnäpfen zur Gewährleistung eines sicheren Halts ist insbesondere deshalb begrenzt, weil deren Saugwirkung einerseits auf nur wirklich glatte Unterlagenflächen begrenzt ist und andererseits mehr oder weniger unkontrollierbar nach einiger Zeit aufgehoben ist. Saugnäpfe verlieren ihre Saugwirkung auch sofort bei seitlicher Verschiebung auf ihrer Unterlage.

Aufgabe der Erfindung ist est, eine Halte- und Haftvorrichtung zu schaffen, welche diese Nachteile vermeidet, d.h. die Standfestigkeit bzw. -sicherheit von Gerätschaften ohne Verwendung zusätzlicher Gewichtsmassen oder unsicherer und unbeweglicher Saugnäpfe vergrößert und damit eine stark verbesserte Sicherheit und Handhabung beim Gebrauch dieser Gerätschaften gewährleistet.

Überraschenderweise hat sich dafür erfindungsgemäß eine Halte- und Haftvorrichtung mit einem Haltekörper bewährt, die eine flexible bzw. elastisch-bewegliche Platte bzw. Folie, welche auch blattartig ausgebildet sein kann, z.B. aus Gummi, Kunststoff od.dgl. in einer Ausführung gemäß Patentanspruch 1 aufweist.

Dabei kann je nach zu erwartender Krafteinwirkung und Kraftrichtung die Befestigung der Platte bzw. Folie an der Unterseite des Haltekörpers von einer punktförmigen bis zu einer flächenmäßigen Ausdehnung unterschiedlich sein, wobei die flächenmäßige Befestigung auch aus einer Vielzahl von dicht nebeneinander liegenden Befestigungspunkten bestehen kann.

Während der mit der Unterseite des Haltekörpers fest verbundene Flächenbereich der Platte bzw. Folie ebenso vergleichsweise flächig-steif ist, wie der damit verbundene Haltekörper, sind die davon seitlich abstehenden Randüberstände bzw. Randbereiche flexibel und elastisch-bewegbar bzw. biegsam.

Die erfindungsgemäße Halte- und Haftvorrichtung liegt im Bereitschaftszustand sowohl mit der Außenseite der am Haltekörper im Bereich ihrer Innenfläche befestigten Platte bzw. Folie aus Gummi, Kunststoff od.dgl., als auch mit deren sich seitlich auswärts ihrer Befestigungsfläche erstreckenden, sonst nicht befestigten beweglichen Randüberstand bzw. Randbereich lediglich mit ihrem Eigengewicht beschwert, auf der hinreichend glatten Unterlage auf und ist darauf nach allen Seiten frei verschiebbar.

Erst im Augenblick des Auftretens einer Abzugskraft, d.h. beim Hochziehen von der Unterlage oder einem Kippmoment bzw. einer Kippkraft bewirkt der dabei in der Anlageebene entstehende Unterdruck ein festes Anlegen bzw. Anschmiegen des flexiblen, elastisch-beweglichen Randüberstands bzw. Randbereichs der Platte bzw. Folie, und zwar insbesondere beginnend an deren äußerem Rand, gegen die Unterlage. Damit wird eine erfindungsgemäße Haftung des Bereichs der Innenfläche der Platte bzw. Folie an der Unterlage mit theoretisch bis zu 1 kg/cm$^2$ gewährleistet.

Dieser Hafteffekt ist umso stärker, je schneller bzw. impulsförmiger die Kraft auf die erfindungsgemäße Halte- und Haftvorrichtung, also durch Hochziehen oder Ankippen, ausgeübt wird.

Dabei paßt sich der flexible bzw. elastisch-bewegliche Randüberstand bzw. Randbereich der Platte bzw. Folie je nach Art seines Materials auch Bodenunebenheiten an. Während dieser Kraftübertragung bzw. Haftkrafteinwirkung ist die erfindungsgemäße Halte- und Haftvorrichtung auch auf ihrer Unterlage seitlich verschiebbar, ohne daß die Haftbereitschaft darunter leidet. Sogar bei Existenz einer Zwischenschicht zwischen der Unterseite der Haftvorrichtung (z. B. ein Blatt Papier oder eine dünne Folie) und der Unterlage dauert diese Haftkraft noch an. Diese Haftkraft ist bei Vorhandensein einer Flüssigkeit (z.B. Wasser, Öl) in der Anlageebene und z. B. vor allem unter Wasser, d.h. bei entsprechendem hydrostatischem Druck, besonders stark.

Die seitliche Verschiebbarkeit selbst bei beanspruchter Haftkraft hängt deutlich von der Härte der Haft-Oberfläche der Platte bzw. Folie ab; bei einem härteren Gummi ist sie größer als bei einem Gummi mit weicher Oberfläche. Gegebenenfalls können auch seitliche Führungen auf der Unterlage vorgesehen sein.

Die Platte bzw. Folie oder ihr flexibler, elastisch-beweglicher Randüberstand bzw. Randbereich kann je nach Verwendung bzw. Beanspruchung unterschiedlich dick sein (z.B. 0,5 bis 3,0 mm oder auch bis 5 mm bzw. 10 mm) sowie zum äußeren Rand hin in der Dicke abnehmend und auch mit Einlagen (Metall oder Gewebe) für eine verbessert zur Seite hin gerichtete Lagenstabilität ausgeführt sein. Auch kann der Haltekörper 1 erfindungsgemäß im Material der flexiblen Platte bzw. Folie eingelagert oder beide Teile in einem Stück hergestellt sein und deren Kontaktseite an die Konturen der Oberfläche der Unterlage angepaßt sowie strukturiert ausgebildet sein.

Das verwendete Platten- bzw. Folienmaterial

2

sollte an den gegebenen Arbeitstemperaturbereich angepaßt werden. Bei hoher Temperatur sind entsprechend wärmebeständige Materialien einsetzbar.

Die Breite des frei beweglichen Randüberstands bzw. Randbereichs um die Befestigungsfläche der Innenfläche der Platte bzw. Folie, d.h. deren Abstand vom Rand des Randbereichs ist ebenfalls von den verschiedensten Anwendungsbedingungen abhängig und kann beispielsweise mit mindestens etwa 0,8 mm (oder in Spezialfällen auch weniger) bis vorzugsweise 1,5 cm oder 2,0 cm bis ca. 5 cm, insbesondere 2,0 cm bis 3,0 cm angegeben werden. Erfindungsgemäß wichtig ist, daß die Halte- und Haftvorrichtung in Bereitschaftstellung auf der Oberfläche der Unterlage aufliegend praktisch keine vorgespannte Unterdruckbildung aufweist, so daß sie beispielsweise bei äußerst sanftem Aufheben keinerlei Haftwirkung zeigt. In der auf der Oberfläche der Unterlage ruhenden Bereitschaftsstellung liegt auch der Randüberstand bzw. Randbereich lediglich mit seinem Eigengewicht an der Oberfläche der Unterlage an, gegebenenfalls aber nicht notwendigerweise abgestützt durch einen seitlichen Abdeckbereich des Haltekörpers.

Die Fläche des freibeweglichen Randüberstands bzw. Randbereichs der Platte oder Folie ist im Vergleich zu ihrer befestigten Innenfläche vergleichsweise groß, doch hängt das wirkungsmäßig optimale Verhältnis dieser beiden Flächen zueinander von verschiedensten anderen Einflußgrößen ab, zu denen unter vielen die absolute Größe der Gesamtfläche und damit die Gesamt-Haftkraft und auch die zu erwartende Impulsstärke gehört. Das Flächenverhältnis kann bei fastpunktförmiger Befestigung z. B. bei 99:1 und bei großer Befestigungsfläche z. B. bei 10:90 liegen oder bei entsprechend variierenden anderen Verhältniszahlen.

Der Randüberstand bzw. Randbereich braucht auch nicht nur allseitig um die Innenfläche herum angeordnet sein. In vielen Fällen ist ein zusammenhängender Randbereich in nur drei Seitenrichtungen ausreichend, nämlich dann wenn die auf die Halte- und Haftvorrichtung ausgeübte Kippkraft derart angesetzt ist, daß die Platte bzw. Folie auf der jeweils vierten der Seitenrichtungen gegen die Unterlage gepresst wird, so daß auf dieser Seite eine Druckabdichtung mittels des elastischen Gummis erfolgt. Da der Haltekörper und die Platte bzw. Folie beliebige Umfangsform (quadratisch, rund, rechteckig etc.) besitzen kann, brauchen z. B. bei einem Dreieck bei entsprechender Kraftrichtung nur jeweils zwei Seiten mit Randbereichen ausgerüstet sein.

In allen Fällen wirkt die jeweils untere Kante des Haltekörpers als Widerlager für eine darauf - im einfachsten Falle über einen entgegengesetzt zur Auflageebene davon abstehenden Hebelarm-Stab oder eine darauf angebrachte Gerätschaft - ausgeübte Kippkraft, und zwar insbesondere auch dann, wenn der Haltekörper seitlich über die Befestigungsfläche hinaus über die Randabschnitte ragende feste Abdeckbereiche aufweist, welche zugleich den elastisch-flexiblen Randüberstand bzw. Randbereich schützend überdecken und als seitlicher Randanschlag dienen.

Im für viele Zwecke einfachsten Falle ist die erfindungsgemäß verwendete flexible elastisch-bewegliche Platte bzw. Folie als eine über die Randbereiche und die Innenfläche durchgehende einstückige Materialbahn ausgebildet, die an der Befestigungsfläche mit dem Haltekörper flächig-steif angebracht ist und gegebenenfalls innerhalb des Bereichs der Befestigungsfläche Ausnehmungen besitzen kann.

Zur verbesserten Anpassung an die Konturen der Unterlage können sowohl mehrere unabhängige Haftvorrichtungen miteinander kombiniert sein oder eine vergrößerte Platte bzw. Folie an mehreren Stellen Haltekörper aufweisen.

Die Erfindung umfaßt auch die zur Verwendung einer als Platte bzw. Folie für eine Halte- oder Haftvorrichtung vorgesehenen Gummi- oder Kunststoff-Folie (auch als Materialbahn oder Zuschnittmaterial), insbesondere in Verbindung mit einer daran bereits befestigten dünnen aber ggfs. mit der Unterseite eines Haftkörpers oder einer Gerätschaft flächig-steifen Zwischenplatte, an der die Platte bzw. Folie bereits an einer Befestigungsfläche fest angebracht z. B. angeklebt ist und an deren freien Seite entweder unmittelbar oder über einen Haltekörper eine Gerätschaft anbringbar ist.

Zur verbesserten Anpassung an die Kontouren der Unterlage oder unterschiedliche Kraftbeanspruchungen können sowohl mehrere unabhängige Haftvorrichtungen miteinander kombiniert sein oder eine vergrößerte flexible, elastisch-bewegliche Platte oder Folie an mehreren Stellen ggfs. verstellbar befestigte Haltekörper aufweisen.

Zur Aufhebung der Haftkraft kann entweder der äußere Rand des Randbereichs der Platte bzw. Folie, ggf. auch mittels einer Lasche angehoben werden oder z. B. durch den Haltekörper hindurch eine verschließbare Lufteinlassöffnung vorgesehen sein.

Zur Erweiterung der Anwendung der erfindungsgemäßen Halte-und Haftvorrichtung kann für die Haftung an ferromagnetischen Unterlagen-Oberflächen entweder im flächig-steifen Haltebereich bzw. an der Innenfläche der Platte bzw. Folie eine magnetische Fläche vorgesehen sein oder der Haltekörper oder auch die Platte bzw. Folie selbst magnetische Wirkung aufweisen. In diesem Falle wird von der magnetischen Haftung eine gewisse Standfestigkeit oder Haftung an lotrechten, magnetischen (z.B. Eisen-) Wänden oder von unten an einer Decke übernommen, die Haftwirkung bei Stoß- oder Schlagbeanspruchung im Moment ihres auftretens aber von der erfindungsgemäßen Haftwirkung durch die platten- bzw. folienartige Konstruktion verstärkt.

Die Erfindung umfaßt ferner die Kombination der beschriebenen Halte- und Haftvorrichtung mit einer zusätzlichen Unterdruck-oder Druck-Steuereinrichtung, welche in dem vom flexiblen, elastisch-beweglichen Randbereich bzw. Randüberstand der Platte bzw. Folie umgebenen Haltebereich des Haltekörpers durch diesen hindurch oder durch die Unterlage hindurch mit der Auflageebene an der Unterlage verbunden ist. Einerseits kann durch Einwirkung eines vergleichsweisen geringen Unterdrucks, d.h. auch mit geringer Leistung, eine außergewöhnlich große und dauerhafte Verstärkung der Haftwirkung erreicht werden; andererseits ist damit die Stärke, der Anfangszeitpunkt und die Beendigung der Haftwirkung z.B. durch Ventile, leicht und genau steuerbar. Die vorgenannte Kombination ist vor allem für die Handhabung von Teilen, z.B. Werkstücken, und den erweiterten Einsatz von Werkzeugen von besonderem Vorteil.

Eine andere Verstärkung der erfindungsgemäßen Haftwirkung wird dadurch erreicht, daß an dem Haltekörper eine z. B. batteriebetirebene Vibrationseinrichtung (Unwucht-Elektromotor, eine Piezo-Schwinger, ein Lautsprecher oder dergl.) vorgesehen wird, mit der schon Schwingungen von 20 bis 30 oder 50 Hz ausreichen, um z. B. mit einer Platte bzw. Folie von ca. 5 cm x 5 cm Kunststoff ein Gewicht von mehr als 500 g an einer Decke schwebend zu halten, und zwar bei ausgesprochen leichtgängiger seitlicher Verschiebbarkeit, d.h. mit nur äußerst geringer Reibung.

In dieser Ausführungsform der Erfindung kann die an ihrem Randbereich flexible bzw. elastisch-bewegliche Platte vergleichsweise etwas steifer ausgebildet sein, als bei der vorhergehend beschriebenen Platte bzw. Folie. Auf diese Weise haftet die Vorrichtung auch bei einer seitlichen Bewegung auf einer welligen Oberfläche, deren Konturen sie zu folgen vermag.

Auch allein eine durch eine seitliche Bewegung über eine wellige Oberfläche ausgeübte Schwingung kann die Haftung verbessern. Das gilt auch für eine schwingende und stoßvibrierende Unterlage sowie bei Anbringung eines schwingenden Trägheitsgewichts am Haltekörper. Auch höhere Schwingungen bis über 1 KHz sind anwendbar.

Weitere Merkmale bzw. deren Kombinationen der Erfindung sind in den Patentansprüchen 2 bis 26 definiert.

Die Erfindung wird nachstehend in mehreren Ausführungsbeispielen näher beschrieben:

Es zeigt

Fig. 1 eine perspektivische Schemadarstellung der Konstruktion der erfindungsgemäßen Halte- und Haftvorrichtung;

Fig. 2A und 2B schematische Querschnittsskizzen entlang der Schnittlinie I-I in Fig. 1 zur Erläuterung der Funktion der Erfindung;

Fig. 3 eine Unteransicht der erfindungsgemäßen Halte- und Haftvorrichtung nach Fig. 1;

Fig. 4 eine Unteransicht einer abgewandelten erfindungsgemäßen Halte- und Haftvorrichtung

Fig. 5 zeigt eine vergrößerte Teilschnittsstellung eines Seitenbereichs der erfin dungsgemäßen Halte- und Haftvorrichtung,

Fig. 6A eine praktische Verwendung der Erfindung am Beispiel eines Flaschenständers und

Fig. 6B am Beispiel einer Steckdosenleiste;

Fig. 7 und 8 eine Schnittdarstellung und Unterseitenansicht einer weiteren abgewandelten Ausführungsform der Erfindung;

Fig. 9 eine schematische Seitenansicht eines Befeuchters;

Fig. 10 eine schematische Seitenansicht einer weiteren praktischen Ausführungsform der Erfindung (Zahnbürstenhalter) mit Klemm-bzw. Schnapphalterung;

Fig. 11 eine schematische Seitenansicht einer weiteren konkreten Ausführungsform der Erfindung in Form eines Folien- und Klebeband-Abrollers;

Fig. 12A und 12B eine Ausführung der Erfindung (Ansicht von unten und Seitenansicht) mit mehreren getrennten Halte- und Haftvorrichtungen und zusätzlich angeordneten Anti-Rutschleisten.

Fig. 13 eine Seiten-Schnittansicht einer mit einer Magnethaftung kombinierten Halte- bzw. Haftvorrichtung;

Fig. 14 eine erfindungsgemäße Halte- bzw. Haftvorrichtung mit gelenkverstellbaren Zwischenstücken als Haltekörper an einer flexiblen, elastisch-beweglichen Platte bzw. Folie;

Fig. 15A und 15B schematische Seitenansichten zur Funktion des Hebelarmwinkels bei der erfindungsgemäßen Halte- bzw. Haftvorrichtung;

Fig. 16 eine weitere haftverstärkende Ausführung der erfindungsgemäßen Halte- und Haftvorrichtung;

Fig. 17a und b sowie

Fig. 18 und

Fig. 19 im Längsschnitt verschiedene Variationen der Anbringung der flexiblen, elastisch-bewegbaren Platte bzw. Folie, insbesondere mit einer Zwischenplatte auf der Unterseite des Haltekörpers (Fig. 17c Draufsicht auf die Oberseite); und

Fig. 20 eine Längsschnittdarstellung einer erfindungsgemäßen Halte- und Haftvorrichtung mit zusätzlicher Haftverstärkung mittels einer damit zusammenwirkenden Vibrationseinrichtung.

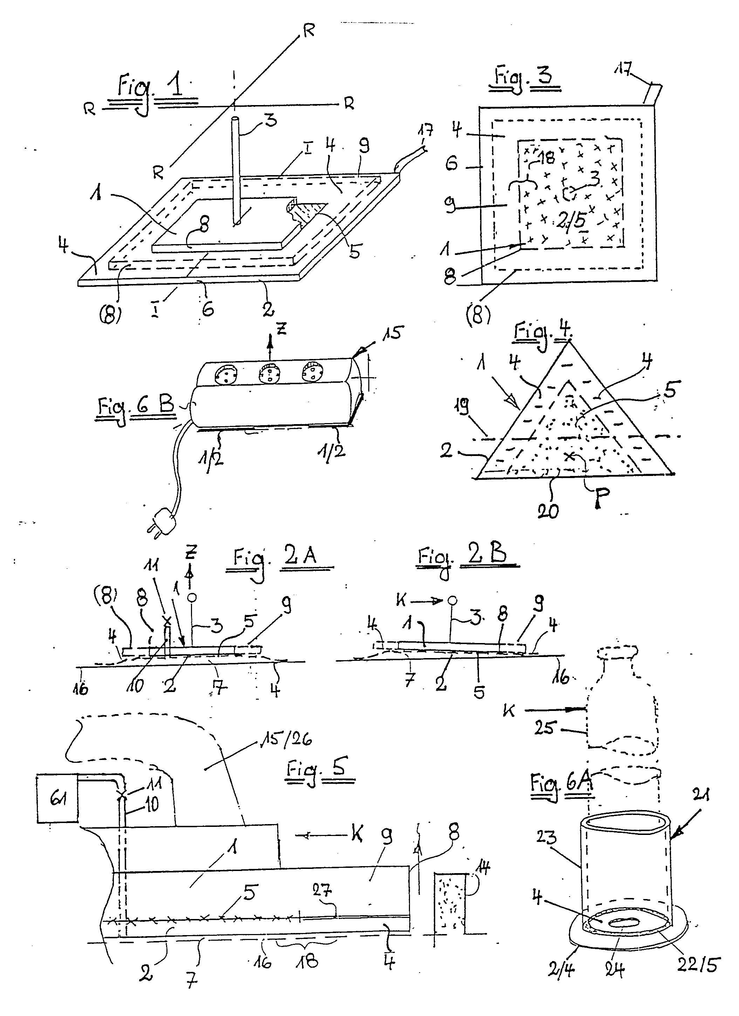

Eine flexible, elastisch-bewegliche Plattte bzw. Folie 2 ist (Fig. 1 und 3) an ihrer Innenfläche über eine Befestigungsfläche 5 mit der Unterseite eines im wesentlichen starren Haltekörpers 1 (mittels Klebstoff oder Anvulkanisieren) fest verbunden, so daß sich an der Unterseite der Halte- und Haftvorrichtung im Bereich ihrer Befestigungsfläche 5 ein innerer flächig-steifer Haltebereich ergibt. Ein über den äußeren Rand 8 des Haltekörpers 1 seitlich hinausragender Randüberstand 4 bzw. Randbereich kann von einem in Fig. 1 und 3 lediglich alternativ dargestellten, seitlich von der Befestigungsfläche abstehenden Abdeckbereich 9 mit äußerem Rand 8 ganz oder teilweise abgedeckt sein, wobei der Randbereich 4 daran nicht befestigt ist und in seiner flexiblen, elastisch-beweglichen Konstitution nicht beeinträchtigt ist. Der Randbereich 4 wird bis zu seinem äußeren Rand 6 hin, insbesondere von seinem übergangsbereich 19 (Fig. 3) zur Befestigungsfläche 5 sich vom flächig-steifen Haltebereich seitlich weg erstreckend gehalten und liegt zusammen mit dem Haltebereich im Bereitschaftszustand ohne Zwang in einer Auflageebene 7 auf einer Unterlage 16.

Bei Einwirkung einer Zugkraft Z (Fig. 2A) oder einer Kippkraft K (Fig. 2B) entsteht in der Auflageebene 7 ein spaltförmiger Unterdruckraum, sodaß sich aufgrund des damit gebildeten Unterdrucks die Randbereiche 4 fest gegen die Unterlage 16 anschmiegen und die Haftwirkung gewährleisten. Bei Einwirkung einer Kippkraft K dient die Unterkante des Randes 8 bzw. (8) dem Hebelarm als Widerlager.

Die Elastizität des Randbereichs 4 ist so gewählt, daß sie sich optimal dichtend an die Oberfläche der Unterlage 16 anschmiegt bzw. anlegt. Die Haftkraft beträgt in Luft bis zu 1 kg/cm² des flächig-steifen Haltebereichs. Die Haftwirkung kann entweder durch eine einfache Lasche 17 (oder ein sonstiges Anheben des Randes 6) oder durch eine Lufteinlaßöffnung 10, ggfs. gesteuert durch ein einfaches Ventil 11, aufgehoben werden.

Die Halte- und Haftvorrichtung kann praktisch jede Umfangsform besitzen und die Randbereiche 4 auch nur zu drei Seitenrichtungen R hin vorgesehen sein. Bei einer dreieckigen Umfangsform (Fig. 4) z.B. kann daher der Randbereich 4 an der einen Randseite 20 entfallen, wenn die Kippkraft K (von oberhalb der Haftvorrichtung) in Richtung dieser Randseite ausgeübt wird. Ebenso wie bei einer Kippkraftbeanspruchung über eine Abkantlinie 19 wird dabei die notwendige Abdichtung durch Andruck der gummiartigen Folie bzw. Platte an die Unterlage 16 gewährleistet.

Auf der der Platte bzw. Folie 2 gegenüberliegenden Seite des Haltekörpers 1 können dann beliebige, per Haftkraft zu sichernde Gerätschaften 15 angebracht sein, wie z.B. (Fig. 6B) eine Steckdosenleiste, ggfs. auch unter kombinierter Verwendung mehrerer Haftvorrichtungen miteinander. Aus der Steckdosenleiste ist ein Stecker in Richtung der Zugkraft Z einhändig herausziehbar.

Der Flaschenständer 21 (Fig. 6A) für eine Flasche 25 kann aus einem hülsenförmigen Halteköcher 23 bestehen, der lediglich mit seiner Stirnfläche 22 auf der Oberseite der Folie 2 befestigt zu sein braucht, deren Randbereiche 4 davon radial einwärts und auswärts dastehen, wobei der innere Randbereich 4 durch das Ausnehmungsloch 24 gebildet wird. Ist dieses nicht vorhanden, dann erfolgt die Haftwirkung allein durch die vom äußeren Randbereich 4 gebildete Schürze. Diese Haftung ist auch dann gegeben, wenn der hülsenförmige Halteköcher 23 bei gegebenem Ausnehmungsloch 24 oben geschlossen wäre.

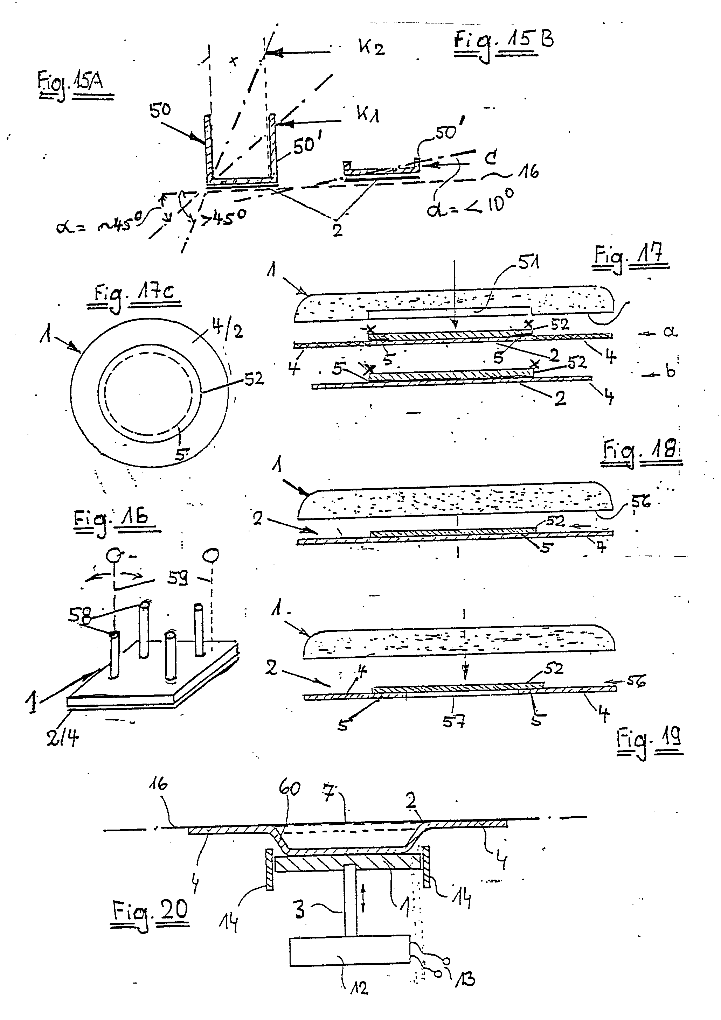

In der vergrößerten schematischen Teilschnittdarstellung gemäß Fig. 5 am Beispiel eines angedeuteten Handgriffs 26 ist mit der Zwischenebene 27 die seitlich außerhalb der Befestigungsfläche 5 verlaufende freie Ebene zwischen der Oberseite des Randbereichs 4 und der Unterseite des steifen bzw. starren seitlichen Abdeckbereichs 9 wiedergegeben. In dieser Ebene können auch Profilierungen (Riffelung, etc.) oder auch ein Spaltabstand (siehe auch Fig. 18 und 19) vorgesehen sein, um eine Adhäsion (z.B. durch einen Wassertropfen) auszuschalten und zu gewährleisten, daß der auch ohne Untergrund freitragend, d.h. formstabil, vom Haltebereich seitlich abstehende Randbereich 4 zur Anlage an der Unterlage 16 freibleibt.

Wegen der seitlichen Verschiebbarkeit können seitliche Führungselemente 14 (siehe auch Fig. 20) vorgesehen sein.

Um den Haftunterdruck in der Auflageebene 7 genau steuern zu können, d.h. zu verstärken oder genau zeitlich definiert aufheben zu können, ist in Fig. 5 (analog Fig. 2A) ein Ventilkanal 10, ggfs. ein Ventil 11 (z.B. ein Rückschlagventil) und eine (Luft-) Drucksteuerungs- bzw. Unterdruckeinrichtung 61 dargestellt.

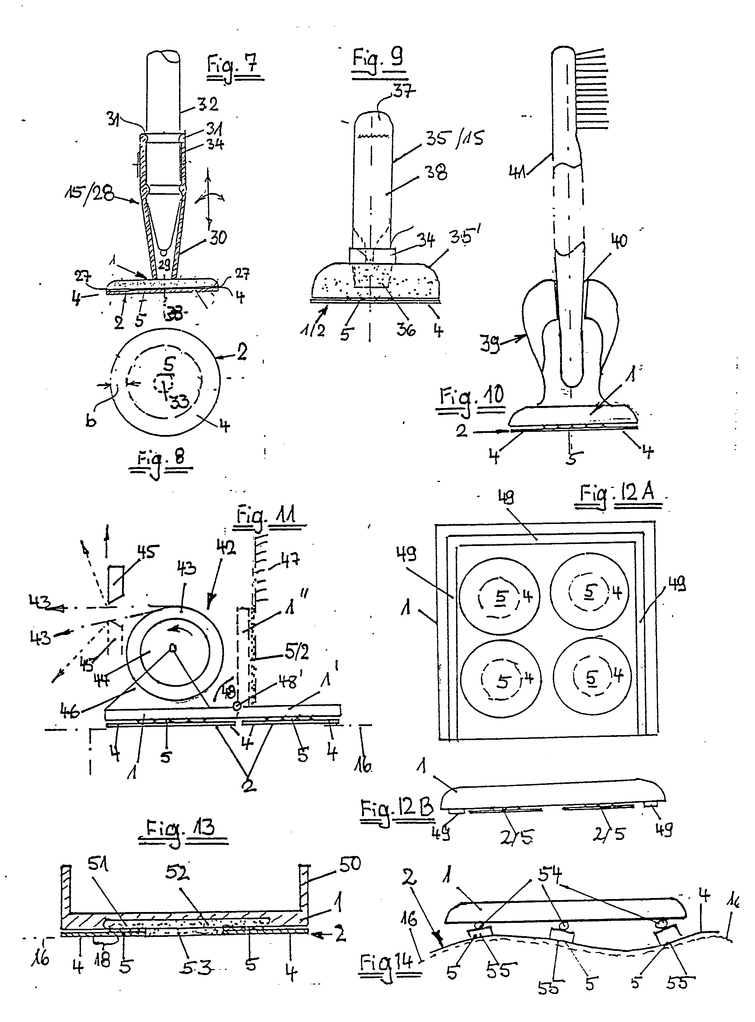

Weitere Gerätschaften 15 können ein Steckhalter 28 für einen Filzschreiber 32 sein, der in einem Steckköcher 30 mittels einer Schnappdichtung oder einer Klemmdichtung 31 gehalten und gegen die Wirkung der Haftvorrichtung einhändig daraus "herausgezupft" werden kann. Fig. 8 definiert die Lage und Breite b des Randbereichs 4. Der Innenraum 29 kann im Sinne der Linie 33 mit der Unterseite der Haftvorrichtung verbunden sein, so daß der Steckhalter 28 bei herausgezogenem Filzschreiber 32 nicht haftet.

Eine andere Gerätschaft kann in einem einhändig zu bedienenden Befeuchter 35 (Fig. 9) bestehen, dessen Befeuchtungsschwämmchen 36 mittels einer Klemmdichtung 31 in einem Feuchtigkeitsbehälter 34 steckt und dessen Handgriff auch eine Nachlauf-Flüssigkeit 38 mit einem Luftpolster aufweisen kann. Statt einer abdichtenden Vorrichtung kann auch eine einfache Schnapp- oder Klemmhalterung 40 für eine Zahnbürste 41 in einem Zahnbürstenständer 39 vorgesehen sein (Fig. 10).

Am Beispiel eines Folien- oder Klebestreifenabrollers 42 (Fig. 11) ist dargestellt, daß die Haftvorrichtung auch in Bezug zur Gerätschaft seitlich versetzt und in einem auf die Kraftbeanspruchung angepaßten Winkel angeordnet sein kann. Das von einer Rolle 44 abgezogene Klebeband 43 kann an (alternativen) Abreißkanten 45 entweder nach oben oder nach unten abgerissen werden. Die Höhe des Ständers 42 und seine Anordnung zu den Haftvorrichtungen sowie die Abziehrichtung bestimmen die gehaltene Abziehkraft. Zur Auflage auf einem Tisch als Unterlage 16 kann die hintere Haftvorrichtung (Haltekörper 1′) um ein Gelenk 48′ flach zurückgeklappt sein, bei Auflagerung gegen eine Wand 47 hochgeklappt und mit einem Winkelhalter 48 in dieser Stellung verriegelt sein.

Um die seitliche Verschiebbarkeit zu reduzieren, können (Fig. 12A und 12B) am Haltekörper 1 Anti-Rutschleisten 49 aus besonders rutschfestem Material vorgesehen sein, deren Höhe auf die Funktion der Platte bzw. Folie 2 abstimmbar ist.

Im Boden eines Untersetzerhalters 50 kann eine Ausnehmung 51 vorgesehen sein, in welche eine Zwischenplatte 52 form- oder kraftschlüssig einsetzbar ist (ggfs. auch wieder herausnehmbar). Unter der Mitte der Zwischenplatte 52 kann in gleicher Höhe wie die Platte oder Folie 2 eine Magnetfläche 53 angeordnet sein.

Eine Anpassung der Haftvorrichtung an eine unebene Unterlage 16 kann durch Zwischenstücke 55 und Schwenkgelenke 54 erfolgen. Aus Fig. 14 ergibt sich zugleich die Möglichkeit, eine flächenmäßig vergrößerte flexible, elastisch-bewegliche Platte oder Folie 2 mit mehreren auf Abstand angeordneten Haltekörpern zu versehen, wobei der Abstand jeweils funktionsmäßig einem Randabschnitt 4 entspricht.

An den Untersetzerhaltern 50 mit Seitenwänden 50′ gemäß Fig. 15A und 15B ist verdeutlicht, wie der Angriffswinkel α der Kippkräfte K1 und K2 sowie eine Verschiebekraft C auf die Haftung wirkt. Dabei können bei kleinem Winkel α Anti-Rutschleisten oder Magnetelemente oder eine Vibrationshaftung von Vorteil sein.

Eine solche Vibrationshaftung kann im einfachsten Falle (Fig. 16) aus im Abstand über dem Haltekörper 1 angeordneten Trägheitsgewichten 59 bestehen, welche bei schon geringer Seiten-Federung und der damit sich ergebenden Schwingung eine deutliche Haftung am Untergrund bewirken und einer seitlichen Verschiebekraft entgegenwirken. Haltestäbe 58 sind bei dem Untersetzerhalter gemäß Fig. 16 zur Halterung von Gegenständen, wie z.B. einer Zigarettenschachtel, bei starker Bewegung der Umgebung, wie z.B. in einem Zug, einem Flugzeug oder auf einem Schiff vorgesehen.

Die mittels Schnapp-Verbindungen (X) in Fig. 17 sowie Klebeverbindungen gemäß Fig. 18 und 19 mit dem Haltekörper 1 zu verbindenden Kombinationen von Zwischenplatten 52 können zur Nachrüstung oder Reparatur gegebener Gerätschaften oder aus Reinigungsgründen vorteilhaft sein. Während in Fig. 17a die Zwischenplatte 52 nur an ihrem äußeren Rand die Befestigungsfläche 5 aufweist, sind die Zwischenplatten 52 in Fig. 17b undd 18 ganzflächig mit einstückigen bzw. durchgehenden platten- bzw. folienartigen, flexiblen und elastisch-biegsamen Materialflächen verbunden. Aus Fig. 18 ergibt sich der freie Zwischenspalt 56 und aus Fig. 19 eine mittlere Ausnehmungsöffnung in der Platte oder Folie 2, wobei die Befestigungsfläche 5 wiederum nur randseitig gegeben ist.

Mit der durch eine Vibrationseinrichtung 12 gemäß Fig. 20 verstärkten Haftvorrichtung lassen sich nicht nur Gewichte unter einer überhängenden Deckenfläche als Unterlage 16 leicht seitenverschieblich und ggfs. in Führungen 14 geführt halten. Eine solche kombinierte Haftvorrichtung kann z.B. auch zum Abheben und seitlichen Wegführen von Tafel- oder Plattenartigem dienen oder auch zur Führung bzw. Umlenkung von bewegten flächenartigen Bändern.

Da das Material der vibrierenden Platte bzw. Folie 2 in dieser kombinierten Ausbildung in ihren Randbereichen 4 eine größere Eigensteifigkeit besitzen kann und sollte, läßt sich bei Verwendung von z.B. verformbaren Kunststoff, der Reibungskontakt der Gesamtanlagefläche 16 durch Profilierung der Platte bzw. Folie 2 z.B. in Form eines Abstandsprofils 60 reduzieren.

### Ansprüche

1. Halte- und Haftvorrichtung mit einem Haltekörper, dadurch **gekennzeichnet,** daß eine flexible bzw. elastisch-bewegliche Platte bzw. Folie (2), z.B. aus Gummi, Kunststoff od.dgl. mit mindestens einem Befestigungspunkt bzw. einer Befestigungsfläche (5) an ihrer mit Abstand zu ihrem Rand (6) angeordneten Innenfläche mit der Unterseite des biegesteifen bzw. vergleichsweise starren Haltekörpers (1) z.B. durch Kleben oder Anvulkanisieren verbunden ist, und daß das Material des sich zwischen Befestigungsfläche (5) und Rand (6) befindlichen Randüberstands (4) der z.B. 0,5 bis 3,0 mm oder auch bis 5 bzw. bis 10 mm dicken Platte bzw. Folie (2) bei Einwirkung einer Abzugs- oder Kippkraft des auf auf einer Unterlage (16) aufliegenden Haltekörpers an die Unterlage (16) anschmiegbar und gegebenenfalls an Bodenunebenheiten anpaßbar ist.

2. Halte- und Haftvorrichtung nach Anspruch 1, **dadurch gekennzeichnet**, daß die Befestigungsfläche (5) am Haltekörper (1) kleiner ist als die Fläche der Platte bzw. Folie (2).

3. Halte- und Haftvorrichtung nach Anspruch 1 oder 2, **dadurch gekennzeichnet**, daß das Verhältnis der Fläche des platten- bzw. folienförmigen Randüberstands (4) bzw. des elastisch-flexiblen Randbereichs der Platte bzw. Folie (2) zur Befestigungsfläche (5) zwischen 99:1 und 10:90 liegt.

4. Halte- und Haftvorrichtung nach Anspruch 3, **dadurch gekennzeichnet**, daß das Verhältnis der Fläche des elastisch-flexiblen platten- bzw. folienförmigen Randüberstands (4) bzw. Randbereichs der Platte bzw. Folie (2) zur Befestigungsfläche (5) je nach den Gesamt-Größen- bzw. Abmessungsverhältnissen oder Beanspruchungen zwischen 95:5, 90:10, 80:20 oder zwischen 60:20, 40:60 sowie 30:70 liegt.

5. Halte- und Haftvorrichtung nach einem der vorhergehenden Ansprüche, **dadurch gekennzeichnet**, daß der Abstand vom Rand (6) des elastisch-flexiblen platten-bzw. folienförmigen Randüberstands (4) bzw. Randbereichs der Platte bzw. Folie (2) zur Befestigungsfläche (5) mindestens 0,8 cm bis vorzugsweise 1,5 oder 2,0 cm bzw. bis ca. 5 cm, insbesondere 2,0 cm bis 3,0 cm beträgt.

6. Halte- und Haftvorrichtung, insbesondere nach einem der vorhergehenden Patentansprüche, **dadurch gekennzeichnet**, daß der elastisch-flexible platten- bzw. folienförmige Randüberstand (4) bzw. Randbereich der Platte bzw. Folie (2) an mindestens drei Seitenrichtungen um die Befestigungsfläche (5) herum angeordnet ist.

7. Halte- und Haftvorrichtung nach einem der vorhergehenden Patentansprüche, **dadurch gekennzeichnet**, daß die Unterseite des Haltekörpers (1) den elastisch-flexiblen platten- bzw. folienförmigen Randüberstand (4) bzw. Randbereich der Platte bzw. Folie (2) in mindestens einer Seitenrichtung wenigstens teilweise mittels eines seitlichen Abdeckbereichs (9) überdeckt.

8. Halte- und Haftvorrichtung nach einem der vorhergehenden Ansprüche, **dadurch gekennzeichnet**, daß zwischen der Oberseite des elastisch-flexiblen platten- bzw. folienförmigen Randüberstands (4) bzw. des Randbereichs der Platte bzw. Folie (2) und der diesen überdeckenden Unterseite des seitlichen Abdeckbereichs (9) des Haltekörpers (1) ein freier Spalt (56) oder eine Aufrauhung oder Texturierung, wie z.B. eine Riffelung vorgesehen ist.

9. Halte- und Haftvorrichtung nach einem der vorhergehenden Ansprüche, **dadurch gekennzeichnet**, daß die flexible bzw. elastisch-bewegliche Platte oder Folie (2) von der Unterseite der Haltevorrichtung (1) abnehmbar und wieder anbringbar ist.

10. Halte- und Haftvorrichtung nach Anspruch 9, **dadurch gekennzeichnet**, daß die flexible bzw. elastisch-bewegliche Platte oder Folie (2) formschlüssig abnehmbar mit der Unterseite des Haltekörpers (1) verbunden ist.

11. Halte- und Haftvorrichtung nach Anspruch 9, **dadurch gekennzeichnet**, daß die der Befestigungsfläche (5) zuzuordnende Unterseite des Haltekörpers (1) getrennt vom übrigen Haltekörper (1) ausgebildet ist und form- oder haftschlüssig am Haltekörper abnehmbar und wieder anbringbar befestigt ist.

12. Halte- und Haftvorrichtung nach Anspruch 9, **dadurch gekennzeichnet**, daß die flexible bzw. elastisch-bewegliche Platte oder Folie (2) mit ihrer Befestigungsfläche (5) an einem vergleichsweise starren Zwischenelement, z.B. einer Zwischenplatte (52), befestigt ist, welche auf ihrer anderen Seite mit dem Haltekörper (1) verbindbar ist.

13. Halte- und Haftvorrichtung nach einem der vorhergehenden Ansprüche, **dadurch gekennzeichnet**, daß am Haltekörper (1) zur Unterlage wirkende magnetische Elemente (53) vorgesehen sind bzw. der Haltekörper (1) Magnet-wirkung aufweist.

14. Halte- und Haftvorrichtung nach einem der vorhergehenden Anspruch, **dadurch gekennzeichnet**, daß die flexible bzw. elastisch-bewegliche Platte bzw. Folie (2) magnetisch ist.

15. Halte- und Haftvorrichtung nach einem der vorhergehenden Ansprüche, **dadurch gekennzeichnet**, daß die Platte bzw. Folie (2) an einer um den Mittelbereich des Haltekörpers (1) herum angeordneten Befestigungszone z.B. einer Stirnfläche (22) am Haltekörper (1) befestigt ist und der elastisch-flexible Randbereich (4) von diesem seitlich auswärts abstehend gehalten wird.

16. Halte- und Haftvorrichtung nach einem der vorhergehenden Ansprüche, **dadurch gekennzeichnet**, daß die Platte bzw. Folie (2) über der Unterseite des Haltekörpers (1) bzw. seiner Befestigungsfläche (5) und der davon seitlich abstehende Randüberstand (4) bzw. Randbereich einstückig ausgebildet ist.

17. Halte- und Haftvorrichtung nach einem der vorhergehenden Ansprüche, **dadurch gekennzeichnet**, daß der Haltekörper (1) im inneren Bereich der Platte oder Folie (2) in deren Material eingelagert ist.

18. Halte- und Haftvorrichtung nach einem der vorhergehenden Ansprüche, **dadurch gekennzeichnet**, daß am Haltekörper (1) ein die Kippkraft übertragender Hebelarm-Stab (3) bzw. eine von der Ebene der am Untergrund (16) anliegenden bzw. aufliegenden flexiblen bzw. elastisch-beweglichen Platte bzw. Folie weggerichtete Gerätschaft (15) befestigt ist.

19. Halte- und Haftvorrichtung nach einem der vorhergehenden Ansprüche, **dadurch gekennzeichnet,** daß am Haltekörper (1) oder an einer Gerätschaft (15) mehrere flexible bzw. elastisch-bewegliche Platten bzw. Folien (2) angebracht sind, und zwar vorzugsweise auch in Ausrichtung auf verschiedene unterschiedlich gerichtete Krafteinwirkungen.

20. Halte- und Haftvorrichtung nach einem der vohergehenden Ansprüche, **dadurch gekennzeichnet,** daß am Haltekörper (1) von der Ebene der am Untergrund (16) anliegenden flexiblen bzw. elastisch-beweglichen Platte bzw. Folie (2) weggerichtet ein auf eine Impulseinwirkung schwingendes Trägheitsgewicht (59) vorgesehen ist.

21. Halte- und Haftvorrichtung nach einem der vorhergehenden Ansprüche, **dadurch gekennzeichnet,** daß am Haltekörper (1) eine mit einer Schnapp- (31) bzw. Klemmdichtung (34) oder einer Klemmvorrichtung (40) versehene Gerätschaft (15), z.B. eine Filzschreiber-, Marker - oder Klebstiftdeckelhülse, befestigt ist, aus der die Gerätschaft unter Haftung der Halte- und Haftvorrichtung an der Unterlage einhändig herauszupfbar ist.

22. Halte- und Haftvorrichtung nach Anspruch 21, **da-gekennzeichnet,** daß zwischen ihrer zur Unterlage (16) gerichteten Unterseite und dem von der Schnapp- (31) oder Klemmdichtung (34) gebildeten Deckel-Innenraum (29) ein Luftkanal (Linie 33) vorgesehen ist.

23. Halte- und Haftvorrichtung nach einem der vorhergehenden Ansprüche, **dadurch gekennzeichnet,** daß in seitlichem Abstand zueinander mehrere Haltekörper (1) oder Befestigungsflächen (5) an einer durchgehenden, gegebenenfalls durch Einschnitte oder Öffnungen unterbrochenen flexiblen, elastisch-beweglichen Platte bzw. Folie (2) vorgesehen sind.

24. Harte- und Haftvorrichtung nach Anspruch 23, **dadurch gekennzeichnet,** daß sie gegebenenfalls zu mehreren miteinander mittels Schwenkgelenken (54) zur Ausrichtung auf unterschiedliche Lagen der Untergrundfläche an einer Gerätschaft (15) angebracht sind.

25. Folie bzw. dünne Platte zur Verwendung bei einer Halte-und Haftvorrichung, insbesondere nach einem der vorhergehenden Ansprüche, auch als Zuschnittmaterial, Materialbahn oder -fläche, **dadurch gekennzeichnet,** daß sie aus einem flexiblen, elastisch-biegsamen Material, wie z.B. Gummi oder Kunststoff od.dgl. besteht, welches bei Befestigung mit ihrer Innenfläche an einem starren Haltekörper (1) auf Einwirkung einer Anzugs-oder Kippkraft auf diesen an einen flächigen Untergrund (16) anlegbar bzw. anschmiegbar ist, und daß die Folie bzw. dünne Platte (2) auf der einen Seite ihrer Innenfläche eine Befestigungsfläche (5) zum Ankleben, Anvulkanisieren od. dgl. aufweist sowie davon zu mindestens drei Seitenrichtungen hin flexible, elastisch-biegsame, seitlich abstehende, freiliegende Randüberstände (4) bzw. Randbereiche aufweist.

26. Folie bzw. dünne Platte nach Anspruch 25, **dadurch gekennzeichnet,** daß sie mit ihrer Befestigungsfläche (5) an der einen Oberflächenseite einer Zwischenplatte (52) befestigt ist, deren andere Oberflächenseite zur Befestigung an einer Gerätschaft vorgesehen ist.

Fig. 7

Fig. 9

Fig. 8

Fig. 10

Fig. 11

Fig. 12 A

Fig. 12 B

Fig. 13

Fig. 14

Fig. 15 B

Fig. 15A

$K_2$

$K_1$

50

50'

50'

$d$

16

50

2

$\alpha = \sim 45°$    $> 45°$

$d = < 10°$

Fig. 17

1

51

Fig. 17c

1

4/2

52

5

52

2

4

5    5    5    2    52

4

5

2

4

$\leftarrow a$

$\leftarrow b$

Fig. 18

1

2

56

52

5    4

Fig. 16

59

58

1

2/4

1

2

4

52

56

5    57    5    4

Fig. 19

16    60    7    2

4

4    14

3    1    14

Fig. 20    14

12    13